# EUROPÄISCHE PATENTANMELDUNG

(11) **EP 3 637 205 A1**
(43) Veröffentlichungstag der Anmeldung: **15.04.2020**
(21) Anmeldenummer: 18199809.7
(22) Anmeldetag: 11.10.2018
(51) Int. Cl.: G05B 19/042, G05B 19/418

(54) **BILDAUFSCHALTUNG AUF EINEM OPERATOR STATION CLIENT**

(71) Anmelder: Siemens Aktiengesellschaft, 80333 München (DE)
(72) Erfinder: Lutz, Benjamin, 76327 Pfinztal (DE)

(57) **Zusammenfassung**

Vorgeschlagen wird ein Übertragungsdienst zur Implementierung in einem Operator Station Server (2, 3) eines Leitsystems (1) einer technischen Anlage, insbesondere Fertigungs- oder Prozessanlage, der dazu ausgebildet und vorgesehen ist, von einem ersten Bediener eines ersten Clients (4) des Operator Station Servers (2) vorgegebene Bedieninformationen zur Laufzeit der technischen Anlage abrufbar in einem Speicher (14, 15) zu hinterlegen, wobei ein Speicherteil des Speichers (14, 15) einem zweiten Bediener eines zweiten Clients (5) zur Hinterlegung von Informationen zugewiesen ist, und wobei der erste Bediener über Schreibrechte auf dem dem zweiten Bediener zugewiesenen Speicherteil des Speichers (14, 15) verfügt, die ihm von dem zweiten Bediener zugewiesen worden sind, und wobei der Übertragungsdienst dazu ausgebildet und vorgesehen ist, Bedieninformationen des ersten Bedieners des ersten Clients (4) derart in dem dem zweiten Bediener zugewiesenen Speicherteil des Speichers (14, 15) zu hinterlegen, dass diese zu einer Konfiguration einer Bildanzeige des zweiten Clients (5) verwendbar sind.

## Beschreibung

Die Erfindung betrifft einen Übertragungsdienst zur Implementierung in einem ersten Operator Station Server eines Leitsystems einer technischen Anlage, insbesondere Fertigungs- oder Prozessanlage, nach Anspruch 1. Außerdem betrifft die Erfindung einen Operation Station Server eines Leitsystems einer technischen Anlage nach Anspruch 10. Zudem betrifft die Erfindung ein Leitsystem einer technischen Anlage, insbesondere Fertigungs- oder Prozessanlage, nach Anspruch 11. Darüber hinaus betrifft die Erfindung ein Verfahren zum Übertragen von Bedieninformationen eines ersten Bedieners eines ersten Operator Station Clients eines Operator Station Servers an einen zweiten Bediener eines zweiten Operation Station Clients nach Anspruch 13.

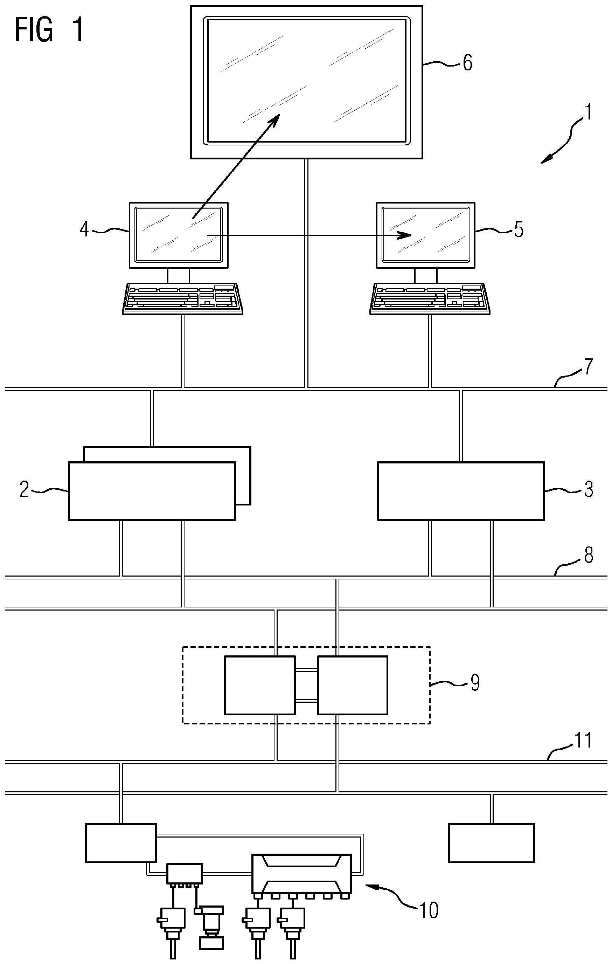

Zur Koordination bei der Bedienung und Beobachtung von technischen Anlagen ist häufig eine von einem Operator Station Client eines Operator Station Servers auf einen anderen Operator Station Client desselben oder eines anderen Operator Station Servers übergreifende Bildaufschaltung notwendig. FIG 1 zeigt einen Ausschnitt aus einem Leitsystem 1 einer technischen Anlage in einem Prinzipschaubild. Das Leitsystem 1 umfasst einen ersten Operator Station Server 2 und einen zweiten Operator Station Server 3, die als redundante Systeme ausgelegt sind. Zudem weist das Leitsystem 1 drei dazugehörige Operator Station Clients 4, 5, 6 auf.

Ein Bediener des Leitsystems 1 kann über die Operator Station Clients 4, 5, 6 mit den beiden Operator Station Servern 2, 3 in Verbindung treten. Hierzu sind sowohl die Operator Station Clients 4, 5, 6 als auch die beiden Operator Station Server 2, 3 mit einem Terminalbus 7 verbunden. Der Terminalbus 7 kann, ohne sich darauf zu beschränken, beispielsweise als Industrial Ethernet ausgebildet sein.

Die Operator Station Server 2, 3 sind über einen an die Operator Station Server 2, 3 angeschlossenen Anlagenbus 8 mit einer Automatisierungsstation 9 verbunden. Die Automatisierungsstation 9 dient als Schnittstelle zwischen den Operator Station Servern 2, 3 und Geräten 10 auf einer Feldebene der technischen Anlage. Dabei nutzt sie zur Verbindung einen Feldbus 11.

Im Rahmen der Erfindung kann eine beliebige Zahl an Geräten 10 und/oder ggf. Applikationen an die Automatisierungsstation 9 angeschlossen sein. Der Anlagenbus 8 kann, ohne sich darauf zu beschränken, beispielsweise als Industrial Ethernet ausgebildet sein. Der Feldbus 11 kann, ohne sich hierauf zu beschränken, als Profinet ausgebildet sein.

Hat ein erster Bediener auf einem Operator Station Client 4 ein Anlagenbild geöffnet, in dem er eine Auffälligkeit erkennt, bedarf dies ggf. einer Klärung. Hierzu kann er weiterer Bediener zu Rate ziehen, die weitere Operator Station Clients 5, 6 bedienen. Zur Klärung kann es vonnöten sein, dass sein aktuell auf der Bildanzeige seines Operator Station Clients 4 dargestelltes Anlagenbild auf den Bildanzeigen der weiteren Operator Station Clients 5, 6 dargestellt ist. Dabei müssen die Bediener nicht zwingend innerhalb der technischen Anlage befindlich sein, was eine manuelle Übertragung der Anlagenbilder nahezu ausschließt.

Bisher bekannte Lösungen bedürfen eines vergleichsweise hohen informationstechnischen (IT) Aufwands. Es müssen beispielsweise Remoteverbindungen eingerichtet, (Zugriffs-)Rechte vergeben, proprietäre Lösungen in das Leitsystem integriert oder in einem Engineering der technischen Anlage entsprechende Verbindungen zwischen den einzelnen Operator Station Clients projektiert werden. Oftmals wird durch die Integration von IT-lastigen Lösungen auch ein bestehendes Funktionsrechtemanagement des Leitsystems umgangen bzw. teilweise außer Kraft gesetzt.

Die WO 2015/032627 A1 offenbart einen bislang bekannten Operator Station Server bzw. eine Bedien-und-Beobachtungseinheit eines Leitsystems einer technischen Anlage.

Der Erfindung liegt die Aufgabe zugrunde, ein Leitsystem anzugeben, das unter Vermeidung der zuvor beschriebenen Nachteile ein effizienteres Bedienen und Beobachten ermöglicht.

Diese Aufgabe wird gelöst durch einen Übertragungsdienst zur Implementierung in einem ersten Operator Station Server eines Leitsystems einer technischen Anlage, insbesondere Fertigungs- oder Prozessanlage, nach Anspruch 1. Außerdem wird die Aufgabe gelöst durch einen Operation Station Server eines Leitsystems einer technischen Anlage nach Anspruch 10. Zudem wird die Aufgabe gelöst durch ein Leitsystem einer technischen Anlage, insbesondere Fertigungs- oder Prozessanlage, nach Anspruch 11 und durch ein Verfahren zum Übertragen von Bedieninformationen eines ersten Bedieners eines ersten Operator Station Clients eines Operator Station Servers an einen zweiten Bediener eines zweiten Operation Station Clients nach Anspruch 13. Vorteilhafte Weiterbildungen ergeben sich aus den abhängigen Ansprüchen.

Erfindungsgemäß ist der Übertragungsdienst zur Implementierung in einem Operator Station Server eines Leitsystems einer technischen Anlage, insbesondere Fertigungs- oder Prozessanlage, dazu ausgebildet und vorgesehen, von einem ersten Bediener eines ersten Operator Station Clients des Operator Station Servers vorgegebene Bedieninformationen zur Laufzeit der technischen Anlage abrufbar in einem Speicher zu hinterlegen. Dabei ist ein Speicherteil des Speichers einem zweiten Bediener eines zweiten Operator Station Clients zur Hinterlegung von Informationen zugewiesen. Der erste Bediener verfügt über Schreibrechte auf dem dem zweiten Bediener zugewiesenen Speicherteil des Speichers, die ihm insbesondere von dem zweiten Bediener mittels des zweiten Operator Station Clients zugewiesen worden sind. Zudem ist der Übertragungsdienst dazu ausgebildet und vorgesehen, Bedieninformationen des ersten Bedieners des ersten Operator Station Clients derart in dem dem zweiten Bediener zugewiesenen Speicherteil des Speichers zu hinterlegen, dass diese zu einer Konfiguration einer Bildanzeige für wenigstens einen zweiten Bediener eines zweiten Operator Station Clients des Operator Station Servers verwendbar sind.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Unter einem Leitsystem wird im vorliegenden Kontext ein computergestütztes, technisches System verstanden, das Funktionalitäten zum Darstellen, Bedienen und Leiten einer technischen Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Unter einem "Operator Station Server" wird vorliegend ein Server verstanden, der zentral Daten eines Bedien- und Beobachtungssystems sowie in der Regel Alarm- und Messwertarchive eines Prozessleitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Clients weiter, die zur Bedienung und Beobachtung eines Betriebs der einzelnen Funktionselemente der technischen Anlage dienen.

Der Operator Station Server kann über Client-Funktionen (im vorliegenden Fall wird hierfür der Begriff "Operator Station Client" verwendet) verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Der Übertragungsdienst verwendet erfindungsgemäß Bedieninformationen des ersten Bedieners des ersten Operator Station Clients und hinterlegt diese abrufbar in einem dem zweiten Bediener zugewiesenen Speicherteil des Speichers Speicher. Dabei ist die Hinterlegung derart ausgestaltet, dass eine Bildanzeige des zweiten Operator Station Clients mittels der Bedieninformationen konfigurierbar, d.h. einstellbar bzw. veränderbar ist.

Die Bedieninformationen des ersten Bedieners werden mittels des erfindungsgemäßen Übertragungsdiensts auf dem dem zweiten Bediener zugewiesenen Speicherteil des Speichers hinterlegt und dem zweiten Bediener für die Bildanzeige des von ihm genutzten Operator Station Clients zur Verfügung gestellt. Vorzugsweise der zweite Bediener selbst hat dem ersten Bediener zuvor wenigstens Schreibrechte auf dem ihm zugewiesenen Speicherteil des Speichers erteilt. Es ist aber auch möglich, dass ein übergeordneter Administrator die Schreibrechte entsprechend zugewiesen hat.

Die Schreibrechte müssen nicht auf den ersten Bediener beschränkt sein, vielmehr können die Schreibrechte einem beliebig großen Bedienerkreis zugänglich sein, vorausgesetzt ein Bediener hat sich erfolgreich gegenüber dem Leitsystem der technischen Anlage authentifiziert.

Es ist nicht notwendig, dass der zweite Bediener gerade dann den zweiten Operator Station Client nutzt, wenn der Übertragungsdienst die Bedieninformationen für eine Konfiguration der Bildanzeige des zweiten Operator Station Clients in den dem zweiten Bediener zugewiesenen Speicherteil des Speichers überträgt.

Der erste Operator Station Client, der zweite Operator Station Client und der dem zweiten Bediener zugewiesene Speicher können auf dem (selben) Operator Station Server implementiert sein. Mit anderen Worten nutzen sowohl der erste Bediener als auch der zweite Bediener Operator Station Clients, die auf einem einzigen Operator Station Server implementiert sind. Es ist jedoch auch möglich, dass der zweite Bediener einen zweiten Operator Station Client nutzt, der auf einem weiteren Operator Station Server implementiert ist. Voraussetzung hierbei ist jedoch, dass die den Bedienern zugewiesenen Speicherteile der Speicher der beiden Operator Station Server in einem Redundanzbetrieb inhaltlich synchronisiert werden. Für nähere Informationen hierzu sei auf die Beschreibung des Ausführungsbeispiels verwiesen.

Bei den Bedieninformationen kann es sich um Einstellungen und/oder Zusammenstellungen handeln, die der erste Bedienermittels des ersten Operator Station Clients vorgenommen hat. Eine Einstellung ist beispielsweise eine Anweisung, die besagt, dass nach einer Anmeldung des Bedieners an dem ersten Operator Station Client des Operator Station Servers die von ihm zuletzt aufgerufenen Anlagenbilder wieder geöffnet werden sollen. Unter einer Zusammenstellung wird beispielsweise eine Sammlung von Trends und Anlagenbildern verstanden, die als vordefinierte Selektion immer wieder geöffnet werden.

Bevorzugt kann es sich bei den Bedieninformationen um Anlagenbilder der technischen Anlage handeln. Diese Anlagenbilder hat der erste Bediener des ersten Operator Station Clients zuvor ausgewählt (beispielsweise, weil sie eine kritische Ausnahmesituation eines Anlagenteils widergeben) und als Bedieninformationen dem Übertragungsdienst zur Verfügung gestellt.

Die auf dem dem zweiten Bediener zugewiesenen Speicherteil des Speichers hinterlegten Bedieninformationen des ersten Bedieners können Informationen über eine Identität des ersten Bedieners umfassen. Dadurch erfährt der zweite Bediener, welcher erste Bediener ihm die Informationen übermittelt hat. Dadurch kann der zweite Bediener gezielt weitere Informationen bei dem ersten Bediener erfragen und ggf. eine Übertragung von Bedieninformationen in umgekehrter Reihenfolge initiieren.

Alternativ oder zusätzlich können die auf dem dem zweiten Bediener zugewiesenen Speicherteil des Speichers hinterlegten Bedieninformationen des ersten Bedieners Informationen darüber umfassen, welche technische Ursache der Hinterlegung der Bedieninformationen zugrunde liegt. Der erste Bediener kann beispielsweise eine Textnachricht für den zweiten Bediener beifügen, die eine Beschreibung des Anlasses für die Überprüfung der Bedieninformationen durch den zweiten Bediener zum Inhalt hat.

Alternativ oder zusätzlich können die auf dem dem zweiten Bediener zugewiesenen Speicherteil des Speichers hinterlegten Bedieninformationen des ersten Bedieners Informationen darüber umfassen, zu welchem Zeitpunkt die Bedieninformationen auf dem Speicher hinterlegt worden sind. Dabei können auch Informationen miteinbegriffen sein, an welchem Ort sich der erste Operator Station Client des ersten Bedieners befindet und/oder welchen Typ der verwendete Operator Station Client aufweist.

Der Übertragungsdienst kann dazu ausgebildet und vorgesehen sein, dem Bediener des zweiten Operator Station Clients als Folge der von dem ersten Bediener in dem dem zweiten Bediener zugewiesenen Speicherteil des Speichers hinterlegten Bedieninformation einen Vorschlag für eine veränderte Konfiguration seiner Bildanzeige zu unterbreiten. Beispielhaft kann der erste Bediener Bedieninformationen in Form von Anlagenbildern in dem dem zweiten Bediener zugewiesenen Speicherteil des Speichers des Operator Station Servers hinterlegt haben. Der zweite Operator wird dann, insbesondere durch einen grafischen Hinweis auf der Bildanzeige des von ihm genutzten zweiten Operator Station Clients, auf den Vorschlag des ersten Bedieners hingewiesen, auf der Bildanzeige des zweiten Operator Station Clients die Anlagenbilder des ersten Bedieners anzuzeigen. Der zweite Bediener kann nun manuell die geänderte Bildanzeige übernehmen, also quasi den Vorschlag des ersten Bedieners annehmen.

Alternativ kann der Übertragungsdienst dazu ausgebildet und vorgesehen sein, dem zweiten Bediener des zweiten Operator Station Clients als Folge der von dem ersten Bediener in dem dem zweiten Bediener zugewiesenen Speicherteil des Speichers hinterlegten Bedieninformation automatisch eine entsprechend angepasste Bildanzeige darzustellen. Dadurch wird beispielsweise ein Anlagenbild, das der erste Bediener dem zweiten Bediener anzeigen lassen will, automatisch von dem zweiten Operator Station Client des zweiten Bedieners angezeigt. Dies kann insbesondere dann vorteilhaft sein, wenn der zweite Operator Station Client das Anlagenbild an eine großformatige Anzeige überträgt, die in der technischen Anlage installiert ist.

Die zuvor erläuterte Aufgabe wird außerdem gelöst durch einen Operator Station Server eines Leitsystems einer technischen Anlage, auf dem ein Übertragungsdienst, der wie zuvor erläutert ausgebildet ist, implementiert ist.

Zudem wird die Aufgabe gelöst durch ein Leitsystem einer technischen Anlage, insbesondere Fertigungs- oder Prozessanlage, das wenigstens einen Operator Station Server umfasst, welcher wie zuvor erläutert ausgebildet ist.

Vorzugsweise umfasst das Leitsystem wenigstens einen zweiten Operator Station Server, wobei die beiden Operator Station Server wenigstens hinsichtlich des Speichers für einen Redundanzbetrieb ausgelegt sind, d.h. den Inhalt der beiden Speicher miteinander abgleichen bzw. synchronisieren.

Darüber hinaus wird die Aufgabe gelöst durch ein Verfahren zum Übertragen von Bedieninformationen eines ersten Bedieners eines ersten Operator Station Clients eines Operator Station Servers an einen zweiten Bediener eines zweiten Operation Station Clients. Das Verfahren umfasst die folgenden Verfahrensschritte:
a) Zuweisung eines Speicherteils eines Speichers zu dem zweiten Bediener eines zweiten Operator Station Clients zur Hinterlegung von Informationen;
b) Gewährung von Schreibrechten auf dem dem zweiten Bediener zugewiesenen Speicherteil des Speichers an den ersten Bediener durch den zweiten Bediener;
c) Abrufbare Hinterlegung von Bedieninformationen des ersten Bedieners des ersten Operator Station Clients des Operator Station Servers zur Laufzeit der technischen Anlage in dem dem zweiten Bediener zugewiesenen Speicherteil des Speichers;
d) Verwendung der in dem dem zweiten Bediener zugewiesenen Speicherteil des Speichers hinterlegten Bedieninformationen zur Konfiguration einer Bildanzeige des zweiten Operator Station Clients und Darbietung der Bildanzeige an den zweiten Bediener.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
- FIG 1: einen Ausschnitt aus einem Leitsystem einer technischen Anlage nach dem Stand der Technik in einem Prinzipschaubild; und
- FIG 2: einen Ausschnitt aus einem erfindungsgemäßen Leitsystem einer technischen Anlage in einem Prinzipschaubild.

In der Zeichnung ist schematisch ein Teil eines erfindungsgemäßen Leitsystems 1 einer technischen Anlage dargestellt. Das Leitsystem 1 umfasst einen ersten Operator Station Server 2 und einen zweiten Operator Station Server 3. Zudem weist das Leitsystem einen ersten Operator Station Client 4 und einen zweiten Operator Station Client 5 auf.

Ein erster Bediener des Leitsystems 1 kann über den ersten Operator Station Client 4 mit dem ersten Operator Station Server 2 und/oder dem zweiten Operator Station Server 3 in Verbindung treten. Hierzu sind sowohl die beiden Operator Station Clients 4, 5 als auch die beiden Operator Station Server 2, 3 mit einem Terminalbus 7 verbunden. Der Terminalbus 7 kann, ohne sich darauf zu beschränken, beispielsweise als Industrial Ethernet ausgebildet sein.

Der erste Operator Station Server 2 weist einen ersten Automatisierungstreiber 12 auf, mittels dessen er über einen an den ersten Operator Station Server 2 angeschlossenen Anlagenbus 8 auf ein (Automatisierungs-)Gerät 9 zugreifen kann. Entsprechend verfügt der zweite Operator Station Server 3 über einen zweiten Automatisierungstreiber 13.

Bei dem angeschlossenen Gerät 9 kann es sich alternativ auch um eine Applikation, insbesondere Webapplikation, handeln. Im Rahmen der Erfindung kann eine beliebige Zahl an Geräten und/oder Applikationen an den die beiden Operator Station Server 2, 3 angeschlossen sein. Der Anlagenbus 8 kann, ohne sich darauf zu beschränken, beispielsweise als Industrial Ethernet ausgebildet sein. Das Gerät 9 kann wiederum mit einer beliebigen Anzahl an Subsystemen (nicht dargestellt) verbunden sein.

Der erste Operation Station Server 2 weist einen Speicher 14 auf, von dem ein bestimmter Teil jeweils dem ersten Bediener des ersten Operator Station Clients 4 und dem zweiten Bediener des zweiten Operator Station Clients 5 zugewiesen ist und in welchem Bedieninformationen wie bestimmte Anlagenbilder oder dergleichen hinterlegt werden können. Der zweite Operator Station Server 3 weist entsprechend einen Speicher 15 auf, von dem ein bestimmter Teil jeweils einem der beiden Bediener zugewiesen ist und in welchem Bedieninformationen wie bestimmte Anlagenbilder oder dergleichen hinterlegt werden können.

Die beiden Operator Station Server 2, 3 sind wenigstens hinsichtlich der beiden Speicher 14, 15 redundant ausgelegt. Dies bedeutet, dass in beiden Speichern 14, 15 die gleichen Informationen hinterlegt sind. Wenn neue Informationen in einen der beiden Speicher 14, 15 geschrieben werden, wird der Speicherinhalt mittels einer automatisch ablaufenden Replikation abgeglichen.

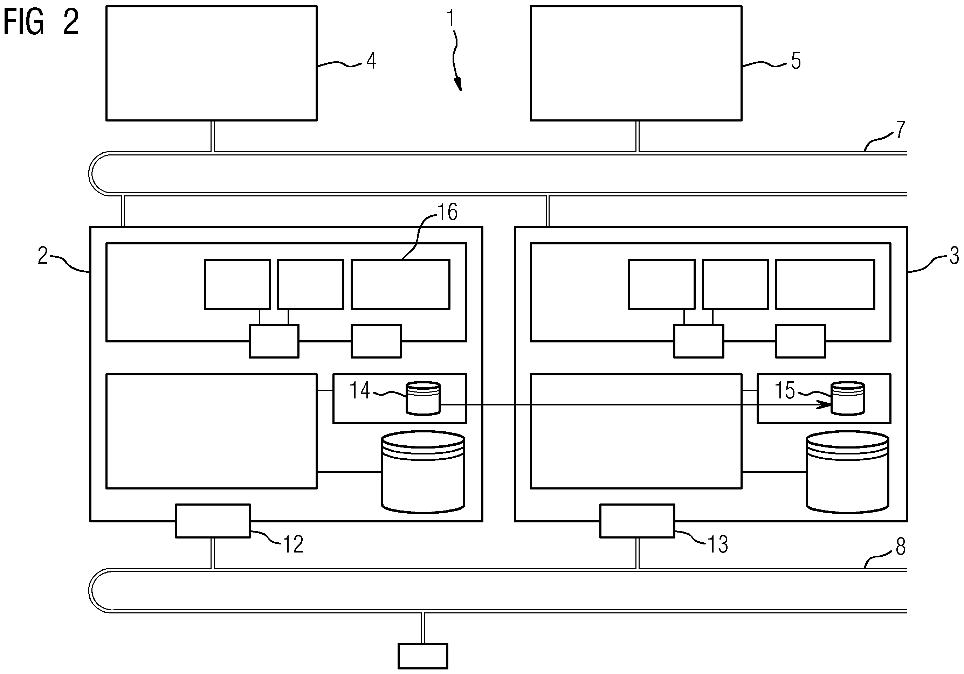

Im Folgenden wird der Ablauf eines erfindungsgemäßen Verfahrens anhand des in FIG 2 dargestellten Ausschnitts des Leitsystems 1 beschrieben.

Der zweite Bediener gewährt dem ersten Bediener Schreibrechte auf dem ihm zugewiesenen Speicherteil der Speicher 14, 15. Die Schreibrechte müssen nicht auf den ersten Bediener beschränkt sein, vielmehr kann eine Vielzahl von Bedienern über Schreibrechte auf dem entsprechenden Speicherteil verfügen.

Der erste Bediener verwendet den ersten Operator Station Client 4 und legt mithilfe des ersten Operator Station Clients 4 Bedieninformationen in Form eines Anlagenbilds fest, die zur Übertragung bzw. Weitergabe an den zweiten Bediener vorgesehen sind. Die Bedieninformationen werden unter Zuhilfenahme eines Benutzerdienstes 16 auf dem dem zweiten Bediener zugewiesenen Speicherteil des Speichers 14 des ersten Operator Station Servers 4 hinterlegt. Von dort aus werden die Bedieninformationen mittels einer automatisch erfolgenden Replikation des Speicherinhalts auf den Speicher 15 des zweiten Operator Station Servers 3 übertragen, so dass der dem zweiten Bediener zugewiesene Speicherteil des Speichers 15 ebenfalls die von dem ersten Bediener hinterlegten Bedieninformationen enthält. Der erste Operator Station Server 4 und der zweite Operator Station Server 3 können, müssen aber nicht redundant betrieben werden.

Es ist auch möglich, dass der Benutzerdienst 16 die Bedieninformationen direkt auf dem dem zweiten Bediener zugewiesenen Speicherteil des Speichers 15 des zweiten Operator Station Servers 3 hinterlegt, um sich den "Umweg" über den Speicher 14 des ersten Operator Station Servers 4 zu umgehen. Allerdings bringt die zunächst erfolgende Hinterlegung der Bedieninformationen auf dem "eigenen" ersten Operator Station Server 4 für den ersten Bediener den Vorteil mit sich, dass eine sichere Hinterlegung der Bedieninformationen garantiert werden kann. Es kann nämlich vorkommen, dass der andere, zweite Operator Station Server 3 zeitweilig nicht verfügbar bzw. erreichbar ist, wodurch die Bedieninformation nicht in dem dazugehörigen Speicher 15 hinterlegt werden könnten.

Der zweite Bediener des zweiten Operator Station Clients 5 erhält auf der Anzeige des zweiten Operator Station Clients 5 einen Hinweis darüber, dass geänderte Bedieninformationen in dem ihm zugewiesenen Speicherteil des Speichers 15 zur Übernahme auf seiner Bildanzeige vorliegen (Rekonfiguration der Bildanzeige). Der zweite Bediener kann dieser Rekonfiguration seiner Bildanzeige dann manuell zustimmen, so dass er als Resultat das Anlagenbild zur Überprüfung dargestellt bekommt, welches der erste Bediener ihm übertragen wollte. Zusätzlich kann der zweite Bediener weitere Informationenwie Kommentare einsehen, die der erste Bediener ihm übertragen hat. Im Falle einer automatischen Übernahme der geänderten Konfiguration ("auto apply"), kann der zweite Bediener das von dem ersten Bediener übertragene Anlagenbild auch automatisch angezeigt bekommen.

Da das eigentliche Öffnen der Bedieninformation (z.B. Anlagenbild) auf dem Operator Station Client 5 des Bedieners ausgeführt wird, der das Bild auch öffnen soll (und nicht "fremdgesteuert"), wird ein bestehendes Funktionsrechtemanagement der technischen Anlage nicht "untergraben", sondern beim Öffnen des Anlagenbildes angewandt. Der zweite Bediener kann daher an dem zweiten Operator Station Client 5 auch nur das Anlagenbild öffnen, bezüglich dessen er über eine entsprechende Berechtigung verfügt.

Da ein Abgleich über die automatische Replikation wenigstens der beiden redundant arbeitenden Speicher 14, 15 stattfindet und die Bedieninformationen an den jeweiligen Bediener gebunden sind, müssen die Operator Station Clients 4, 5 in einer Engineering-Phase des Leitsystems 1 bzw. der technischen Anlage nicht netzwerktechnisch miteinander bekannt gemacht werden.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

## Patentansprüche

1. Übertragungsdienst zur Implementierung in einem Operator Station Server (2, 3) eines Leitsystems (1) einer technischen Anlage, der dazu ausgebildet und vorgesehen ist, von einem ersten Bediener eines ersten Clients (4) des Operator Station Servers (2) vorgegebene Bedieninformationen zur Laufzeit der technischen Anlage abrufbar in einem Speicher (14, 15) zu hinterlegen,
wobei ein Speicherteil des Speichers (14, 15) einem zweiten Bediener eines zweiten Clients (5) zur Hinterlegung von Informationen zugewiesen ist, und wobei der erste Bediener über Schreibrechte auf dem dem zweiten Bediener zugewiesenen Speicherteil des Speichers (14, 15) verfügt, die ihm insbesondere von dem zweiten Bediener zugewiesen worden sind,
und wobei der Übertragungsdienst dazu ausgebildet ist und vorgesehen ist, Bedieninformationen des ersten Bedieners des ersten Clients (4) derart in dem dem zweiten Bediener zugewiesenen Speicherteil des Speichers (14, 15) zu hinterlegen, dass diese zu einer Konfiguration einer Bildanzeige des zweiten Clients (5) verwendbar sind.

2. Übertragungsdienst nach Anspruch 1, bei dem der erste Client (4), der zweite Client (5) und der dem zweiten Bediener zugewiesene Speicherteil des Speichers (14, 15) auf demselben Operator Station Server (2, 3) implementiert sind.

3. Übertragungsdienst nach Anspruch 1 oder 2, der dazu ausgebildet und vorgesehen ist, dem zweiten Bediener des zweiten Clients (5) als Folge der von dem ersten Bediener in dem dem zweiten Bediener zugewiesenen Speicherteil des Speichers (14, 15) hinterlegten Bedieninformation einen Vorschlag für eine veränderte Konfiguration seiner Bildanzeige zu unterbreiten.

4. Übertragungsdienst nach Anspruch 1 oder 2, der dazu ausgebildet und vorgesehen ist, dem Bediener des zweiten Clients (5) als Folge der von dem ersten Bediener in dem dem zweiten Bediener zugewiesenen Speicherteil des Speichers (14, 15) hinterlegten Bedieninformation automatisch eine entsprechend angepasste Bildanzeige darzustellen.

5. Übertragungsdienst nach einem der vorangegangenen Ansprüche, bei dem die auf dem dem zweiten Bediener zugewiesenen Speicherteil des Speichers (14, 15) hinterlegten Bedieninformationen des ersten Bedieners Anlagenbilder der technischen Anlage umfassen.

6. Übertragungsdienst nach einem der vorangegangenen Ansprüche, bei dem die auf dem dem zweiten Bediener zugewiesenen Speicherteil des Speichers (14, 15) hinterlegten Bedieninformationen des ersten Bedieners Informationen über eine Identität des ersten Bedieners umfassen.

7. Übertragungsdienst nach einem der vorangegangenen Ansprüche, bei dem die auf dem dem zweiten Bediener zugewiesenen Speicherteil des Speichers (14, 15) hinterlegten Bedieninformationen des ersten Bedieners Informationen darüber umfassen, welche technische Ursache der Hinterlegung der Bedieninformationen zugrunde liegt.

8. Übertragungsdienst nach einem der vorangegangenen Ansprüche, bei dem die auf dem dem zweiten Bediener zugewiesenen Speicherteil des Speichers (14, 15) hinterlegten Bedieninformationen des ersten Bedieners Informationen über den ersten Client (4) umfassen.

9. Übertragungsdienst nach einem der vorangegangenen Ansprüche, bei dem die auf dem dem zweiten Bediener zugewiesenen Speicherteil des Speichers (14, 15) hinterlegten Bedieninformationen des ersten Bedieners Informationen darüber umfassen, zu welchem Zeitpunkt die Bedieninformationen auf dem Speicherteil des Speichers (14, 15) hinterlegt worden sind.

10. Operation Station Server (2, 3) eines Leitsystems (1) einer technischen Anlage, auf dem ein Übertragungsdienst gemäß einem der Ansprüche 1 bis 9 implementiert ist.

11. Leitsystem (1) einer technischen Anlage, insbesondere Fertigungs- oder Prozessanlage, das wenigstens einen Operator Station Server (2, 3) gemäß Anspruch 10 umfasst.

12. Leitsystem (1) gemäß Anspruch 11, das wenigstens einen zweiten Operator Station Server (2, 3) gemäß Anspruch 10 umfasst, die wenigstens hinsichtlich des Speichers (14, 15) für einen Redundanzbetrieb ausgelegt sind.

13. Verfahren zum Übertragen von Bedieninformationen eines ersten Bedieners eines ersten Clients (4) eines Operator Station Servers (2) an einen zweiten Bediener eines zweiten Clients (5), umfassend:
a) Zuweisung eines Speicherteils eines Speichers (14, 15) an den zweiten Bediener des zweiten Clients (5) zur Hinterlegung von Informationen;
b) Gewährung von Schreibrechten auf dem dem zweiten Bediener zugewiesenen Speicherteil des Speichers (14 ,15) an den ersten Bediener durch den zweiten Bediener;
c) Abrufbare Hinterlegung von Bedieninformationen des ersten Bedieners des ersten Clients (4) des Operator Station Servers (2, 3) zur Laufzeit der technischen Anlage in dem dem zweiten Bediener zugewiesenen Speicherteil des Speichers (14 ,15);
d) Verwendung der in dem dem zweiten Bediener zugewiesenen Speicherteil des Speichers (14 ,15) hinterlegten Bedieninformationen zur Konfiguration einer Bildanzeige des zweiten Clients (5) und Darbietung der Bildanzeige an den zweiten Bediener.
